# EUROPEAN PATENT APPLICATION

(11) **EP 3 687 172 A1**
(43) Date of publication of application: **29.07.2020**
(21) Application number: 19305078.8
(22) Date of filing: 22.01.2019
(51) Int. Cl.: H04N 19/176, H04N 19/61, H04N 19/12, H04N 19/70

(54) **MULTIPLE TRANSFORMS SELECTION SIGNALLING**

(71) Applicant: InterDigital VC Holdings, Inc., Wilmington, DE 19809 (US)
(72) Inventor: GALPIN, Franck, 35576 Cesson-Sévigné (FR); POIRIER, Tangi, 35576 Cesson-Sévigné (FR); NASER, Karam, 35576 Cesson-Sévigné (FR)
(74) Representative: Huchet, Anne

(57) **Abstract**

At least a method and an apparatus are presented for efficiently encoding or decoding video using multiple transforms, such as, e.g., enhanced multiple transform (EMT), or multiple transform selection (MTS). For example, a horizontal transform and a vertical transform are selected from a set of transforms to transform prediction residuals of a current block of a video picture being encoded, wherein the set of transforms includes only pairs of: {DCT2, DCT2}, {DST7, DST7}, {DCT8, DST7}, {DST7, DCT8}. A syntax element is provided to indicate the selected horizontal transform and the selected vertical transform selected from the set of transforms. The prediction residuals of the current block are transformed using the selected horizontal transform and the selected vertical transform to obtain transformed coefficients for the current block. The syntax element and the transformed coefficients of the current block are encoded accordingly.

## Description

### TECHNICAL FIELD

The present embodiments generally relate to a method and an apparatus for video encoding or decoding, and more particularly, to a method and an apparatus for efficiently encoding and decoding of video using multiple transforms such as, e.g., enhanced multiple transform (EMT), or multiple transform selection (MTS).

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

According to an embodiment, a method for video encoding is presented, comprising: selecting a horizontal transform and a vertical transform from a set of transforms to transform prediction residuals of a current block of a video picture being encoded, wherein the set of transforms includes {DCT2, DCT2} and one or more other transform pairs; providing a syntax element indicating the selected horizontal transform and the selected vertical transform selected from the set of transforms; transforming the prediction residuals of the current block using the selected horizontal transform and the selected vertical transform to obtain transformed coefficients for the current block; and encoding the syntax element and the transformed coefficients of the current block.

According to another embodiment, a method for video decoding is presented, comprising: obtaining a syntax element indicating a selected horizontal transform and a selected vertical transform selected from a set of transforms; determining, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; inversely transforming the transformed coefficients of the current block using the selected horizontal transform and the selected vertical transform to obtain prediction residuals for the current block; and decoding the current block using the prediction residuals.

According to another embodiment, an apparatus for video encoding is presented, comprising: means for selecting a horizontal transform and a vertical transform from a set of transforms to transform prediction residuals of a current block of a video picture being encoded, wherein the set of transforms includes {DCT2, DCT2} and one or more other transform pairs; means for providing a syntax element indicating the selected horizontal transform and the selected vertical transform selected from the set of transforms; means for transforming the prediction residuals of the current block using the selected horizontal transform and the selected vertical transform to obtain transformed coefficients for the current block; and encoding the syntax element and the transformed coefficients of the current block.

According to another embodiment, an apparatus for video decoding is presented, comprising: means for obtaining a syntax element indicating a selected horizontal transform and a selected vertical transform selected from a set of transforms; means for determining, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; means for inversely transforming the transformed coefficients of the current block using the selected horizontal transform and the selected vertical transform to obtain prediction residuals for the current block; and means for decoding the current block using the prediction residuals.

According to another embodiment, an apparatus for video encoding is presented, comprising one or more processors, wherein said one or more processors are configured to: select a horizontal transform and a vertical transform from a set of transforms to transform prediction residuals of a current block of a video picture being encoded, wherein the set of transforms includes {DCT2, DCT2} and one or more other transform pairs; provide a syntax element indicating the selected horizontal transform and the selected vertical transform selected from the set of transforms; transforming the prediction residuals of the current block using the selected horizontal transform and the selected vertical transform to obtain transformed coefficients for the current block; and encode the syntax element and the transformed coefficients of the current block.

According to another embodiment, an apparatus for video decoding is presented, comprising one or more processors, wherein said one or more processors are configured to: obtain a syntax element indicating a selected horizontal transform and a selected vertical transform selected from a set of transforms; determine, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; inversely transform the transformed coefficients of the current block using the selected horizontal transform and the selected vertical transform to obtain prediction residuals for the current block; and decode the current block using the prediction residuals.

According to another embodiment, a signal comprising encoded video is formed by performing: selecting a horizontal transform and a vertical transform from a set of transforms to transform prediction residuals of a current block of a video picture being encoded, wherein the set of transforms includes {DCT2, DCT2} and one or more other transform pairs; providing a syntax element indicating the selected horizontal transform and the selected vertical transform selected from the set of transforms; transforming the prediction residuals of the current block using the selected horizontal transform and the selected vertical transform to obtain transformed coefficients for the current block; and encoding the syntax element and the transformed coefficients of the current block.

### BRIEF DESCRIPTION OF THE DRAWINGS

FIG. 1 illustrates a block diagram of an embodiment of a video encoder.
FIG. 2 illustrates a block diagram of an embodiment of a video decoder.
FIG. 3 illustrates a process for encoding using enhanced multiple transform in the VTM software.
FIG. 4 illustrates a process for encoding using multiple transform selection, according to an embodiment.
FIG. 5 illustrates a block diagram of a system within which aspects of the present embodiments may be implemented.

### DETAILED DESCRIPTION

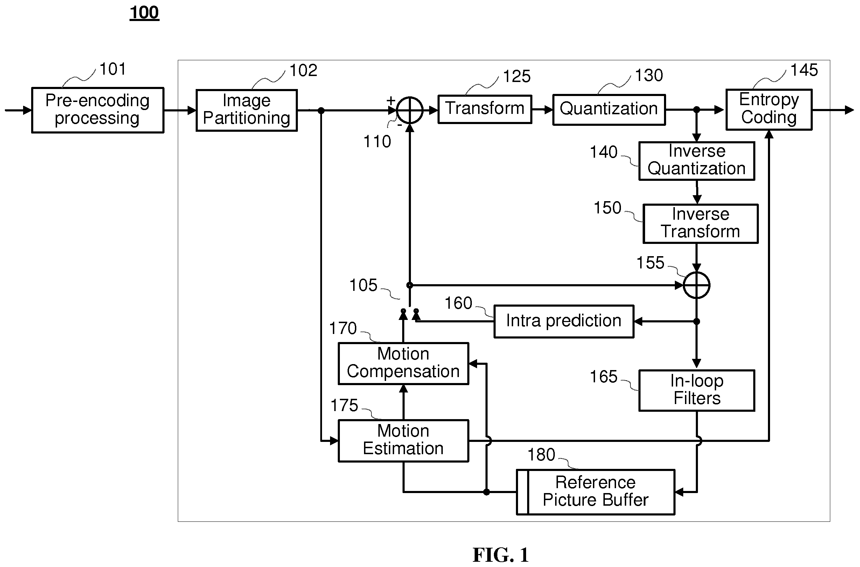

FIG. 1 illustrates a video encoder 100, such as a High Efficiency Video Coding (HEVC) encoder. FIG. 1 may also illustrate an encoder in which improvements are made to the HEVC standard or an encoder employing technologies similar to HEVC, such as a VVC (Versatile Video Coding) encoder under development by JVET (Joint Video Exploration Team).

In the present application, the terms "reconstructed" and "decoded" may be used interchangeably, the terms "encoded" or "coded" may be used interchangeably, and the terms "image", "picture" and "frame" may be used interchangeably. Usually, but not necessarily, the term "reconstructed" is used at the encoder side while "decoded" is used at the decoder side.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In HEVC, to encode a video sequence with one or more pictures, a picture is partitioned (102) into one or more slices where each slice may include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" may be used to refer, for example, to any of CTU, CU, PU, TU, CB, PB, and TB. In addition, the "block" may also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

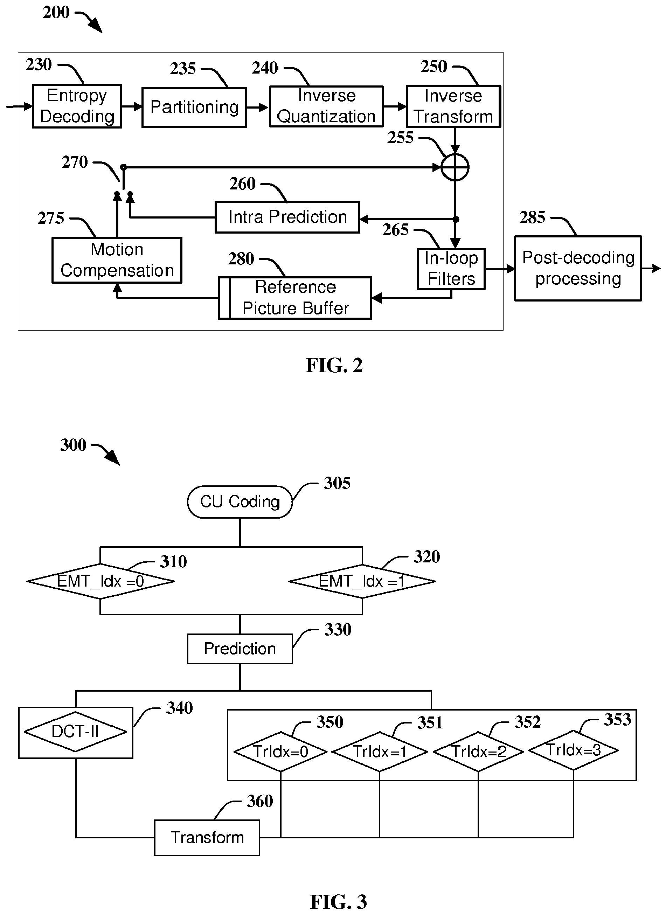

FIG. 2 illustrates a block diagram of a video decoder 200, such as an HEVC decoder. In the decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a VVC decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) and inverse transformed (250) to decode the prediction residuals.

Combining (255) the decoded prediction residuals and the predicted block, an image block is reconstructed. The predicted block may be obtained (270) from intra prediction (260) or motion-compensated prediction (i.e., inter prediction) (275). In case of bi-prediction, two motion compensated predictions may be combined with a weighted sum. In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

The present disclosure is directed to video coding or decoding, in particular to transform coding or decoding where multiple transforms could be used.

The enhanced multiple transform (EMT), or multiple transform selection (MTS), is currently a coding tool that is adopted in the versatile video coding test model (VTM) (see Jianle Chen, Yan Ye, Seung Hwan Kim: "Algorithm description for Versatile Video Coding and Test Model 2 (VTM 2)," JVET document, 11th Meeting: Ljubljana, SI, July 10-18, 2018, JVET-K1002 (2018)). EMT is currently controlled and indicated by an indicating flag at the coding unit (CU) level. The EMT indicating flag is one when EMT is used, and is zero for the default core transform (DCT-II).

When the EMT flag is enabled, the encoder selects the best EMT pair from a set of 4 predefined pairs and encodes the transform index to indicate which pair is selected. However, it could be shown that not all pairs are equally probable to be selected. In fact, the last pair are usually the least probable and there is a very marginal loss when neglecting this pair. This fact could be exploited by reducing the pairs into three and modify the coding of both the EMT flag and the transform index as described in further detail below.

The present disclosure proposes to exploit the redundancy of EMT pairs by removing the last pair from the list. In one embodiment, it is proposed to place the default core transform pair (DCT-II for both horizontal and vertical transforms) in the EMT list. This is intentionally done in order to remove the EMT flag. In other words, the case when EMT flag is zero, which corresponds to DCT-II (for both horizontal and vertical transforms), is already included in the EMT list. This reduces the bitrate required for signaling. Additionally, the encoding time is considerably reduced. This is because currently the encoder performs two passes for the search, one in which the EMT flag is zero and the other in which the EMT flag is one. This is reduced to one pass with 3 EMT transforms plus the default transform of DCT-II.

FIG. 3 illustrates an encoding process 300 for encoding of EMT in the VTM software. As shown in FIG. 3, the encoding of a CU starts at 305 of the process 300. The encoding of the EMT for a CU consists of two passes: with EMT flag (i.e., EMT_Idx) equals zero (at 310) or one (at 320). For both cases, the prediction (at 330), transform (at 360) are performed and followed by the quantization step (not shown). The encoder finds the best configuration (EMT_Idx and TrIdx) that minimizes the RD cost and encodes the EMT_Idx and TrIdx (if needed). The EMT set consists of 4 pairs of transforms (at 350, 351, 352 and 353), where each pair represent a horizontal transform and a vertical transform. The pairs are indexed by an index (TrIdx in FIG. 3) that is encoded in the bitstream using 2 bits.

As mentioned before, the last pair (at 353) usually has the least probability of being selected. Accordingly, The present disclosure proposes to remove this last pair and to replace this pair with the core transforms (DCT-II for both horizontal and vertical). By doing so, the EMT flag is not required and thus not encoded in the bitstream, providing further efficiency.

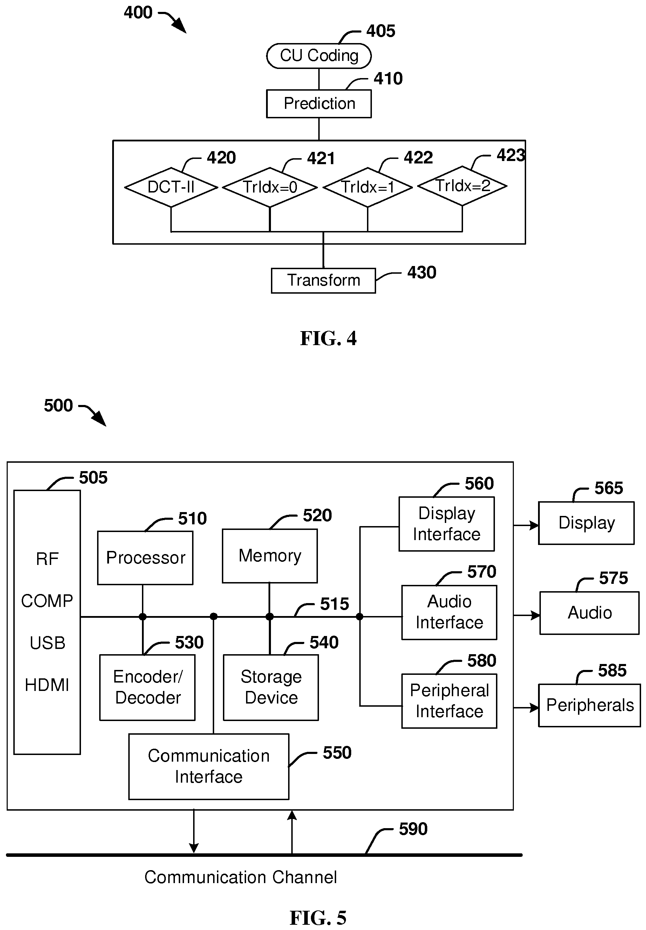

FIG. 4 provides a process 400 for encoding using multiple transform selection, according to an embodiment. Similar to the previous process 300 shown in FIG. 3, for encoding of a CU starting at 405, the prediction is performed (at 410) followed by the transform stage (at 430). The transform pair is selected from the set that contains DCT-II for both horizontal and vertical transforms (at 420), first EMT pair (at 421), second pair (at 422) and the third pair (at 423).

At the decoder side, the decoder decodes a syntax element indicating which transform pair is selected from a transform set, where the transform set includes a core transform pair. The decoder then performs the inverse transform based on the selected transform pair.

The present technique will have an impact on the transform unit syntax. Currently, the EMT flag (cu_mts_flag) is used as described in the follows (see Benjamin Bross, Jianle Chen, Shan Liu: "Versatile Video Coding (Draft 2)" JVET document, 11th Meeting: Ljubljana, SI, July 10-18, 2018, JVET-K1001 (2018)), where ae(v) is arithmetic coding engine coding of the variable (v).:

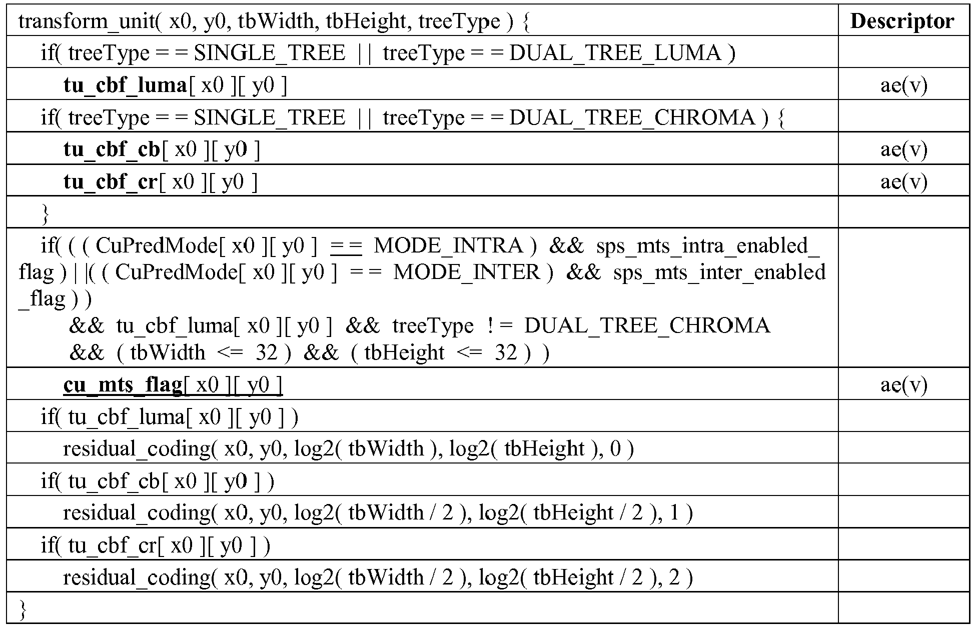

The present disclosure proposes to remove the coding of the EMT flag (cu_mts_flag in the above syntax table) for the intra coding case. Thus, the new syntax will be (see, e.g., shaded portions):

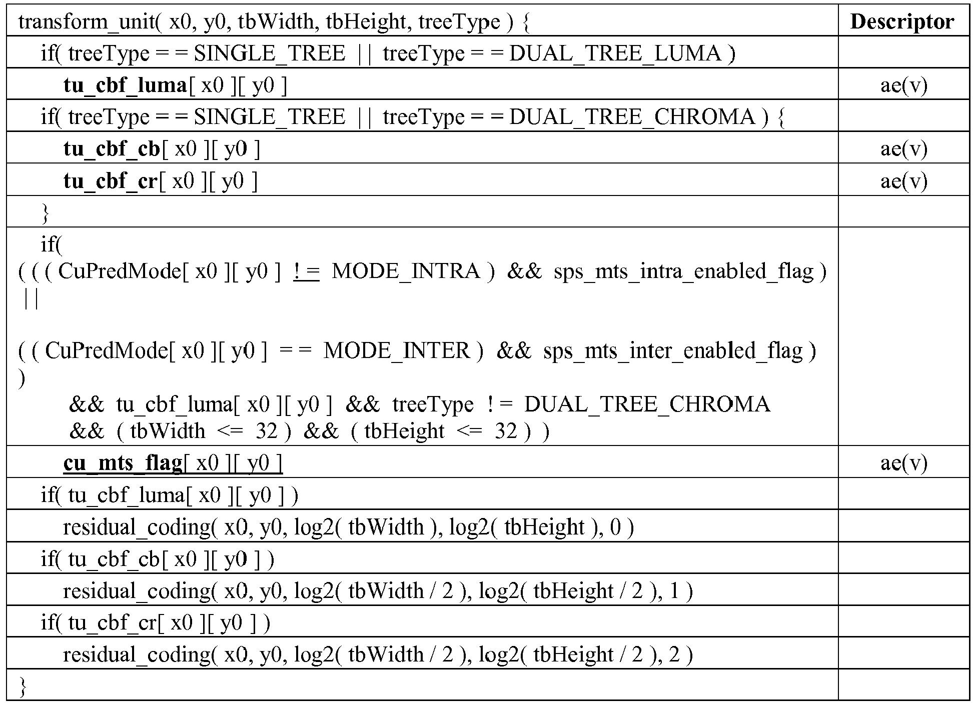

Additionally, the present embodiments would impact the coding of the Transform Skip Flag. Specifically, the skip flag is only coded when the MTS flag equals to zero (see JVET-K1001), and it indicates whether a transform is applied to the associated transform block or not. Below is the current residual coding syntax:

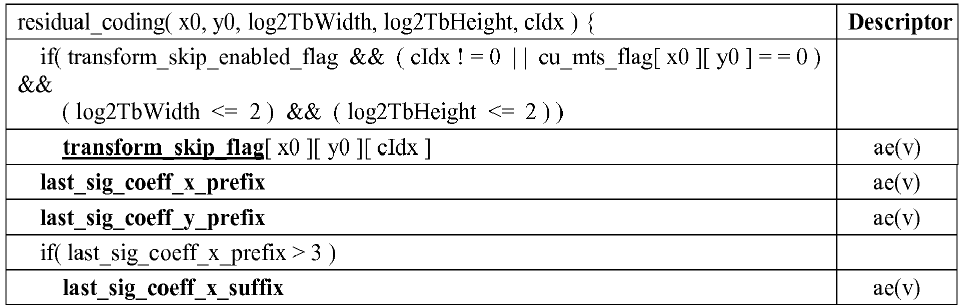

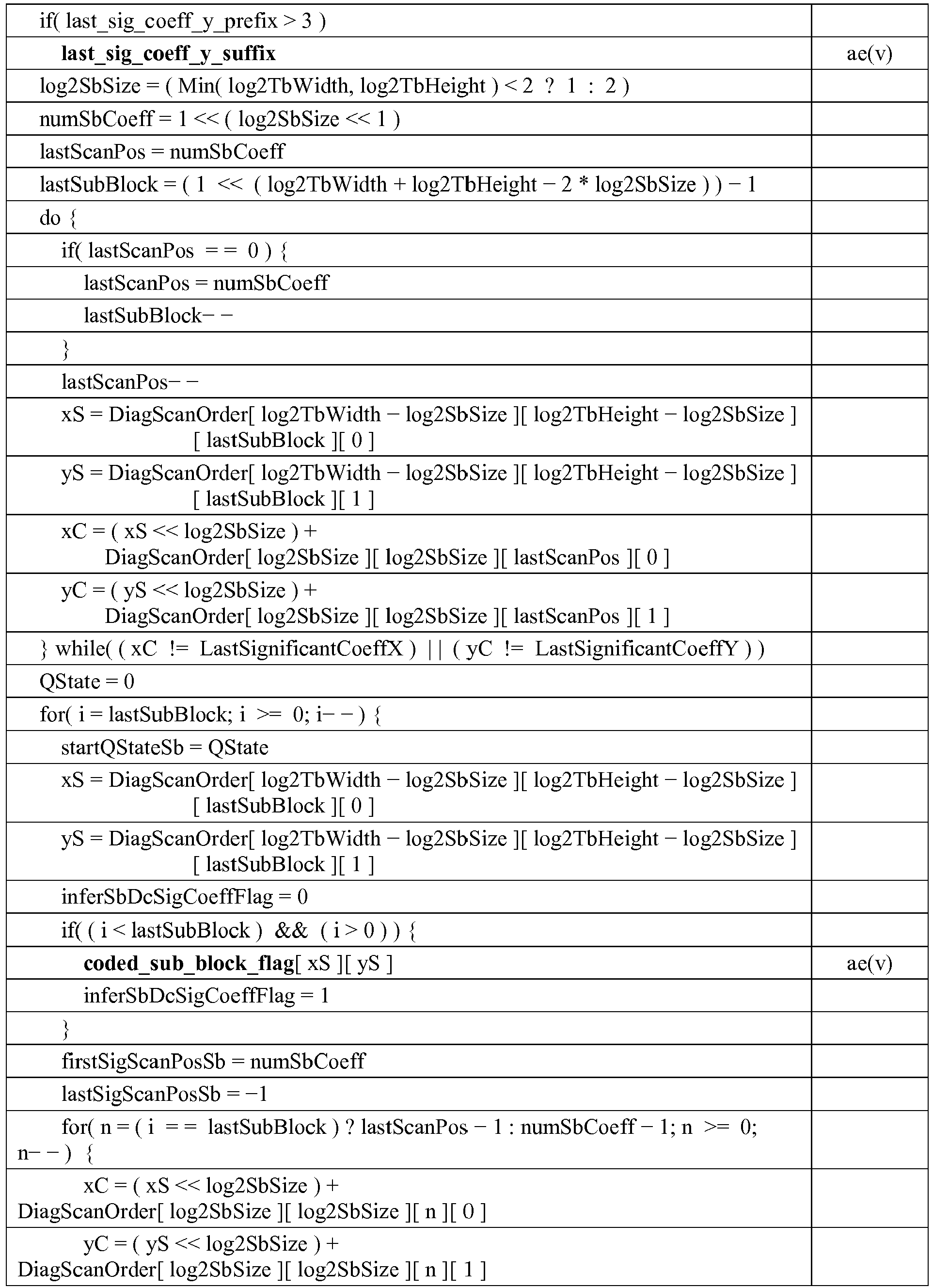

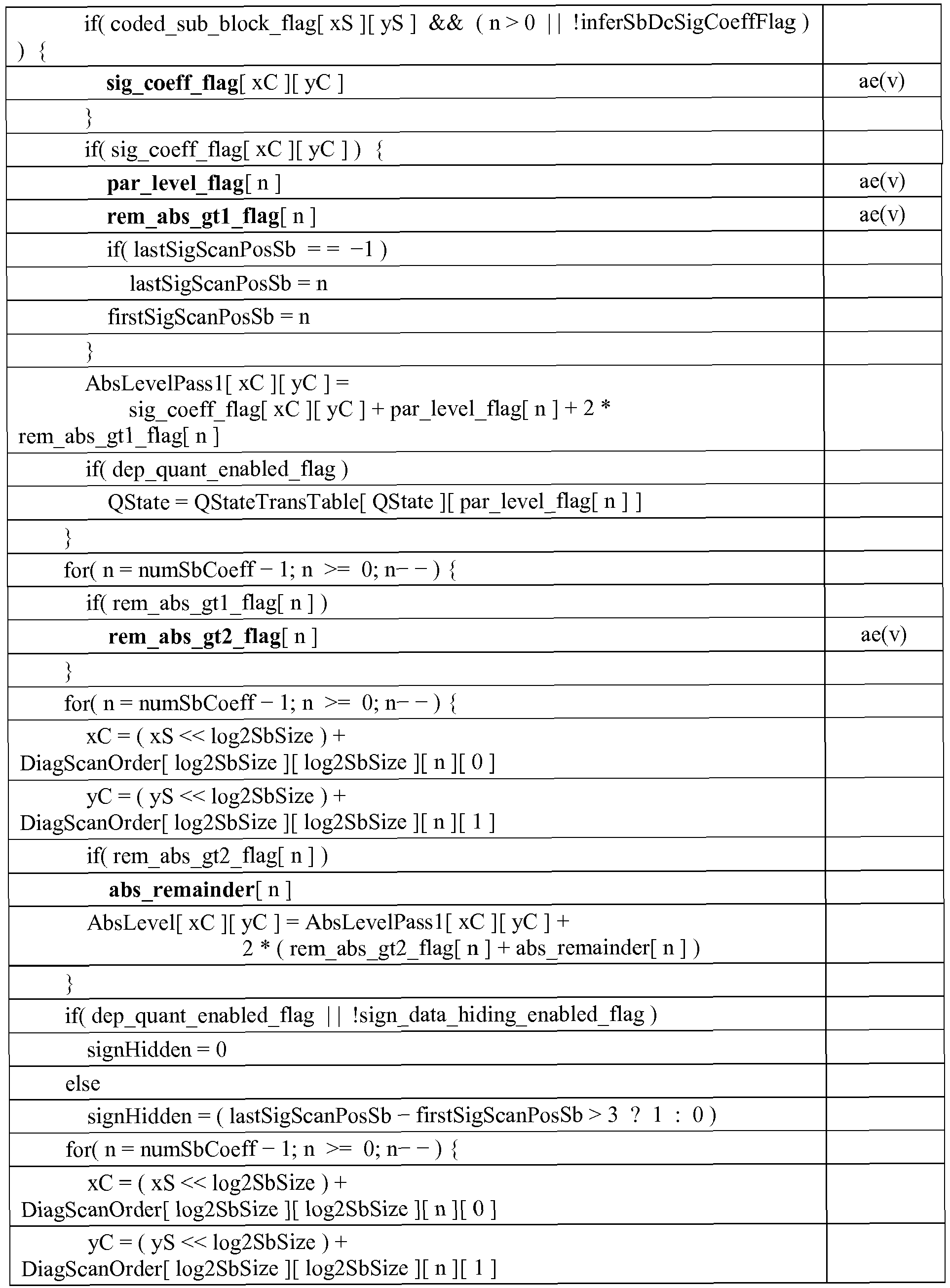

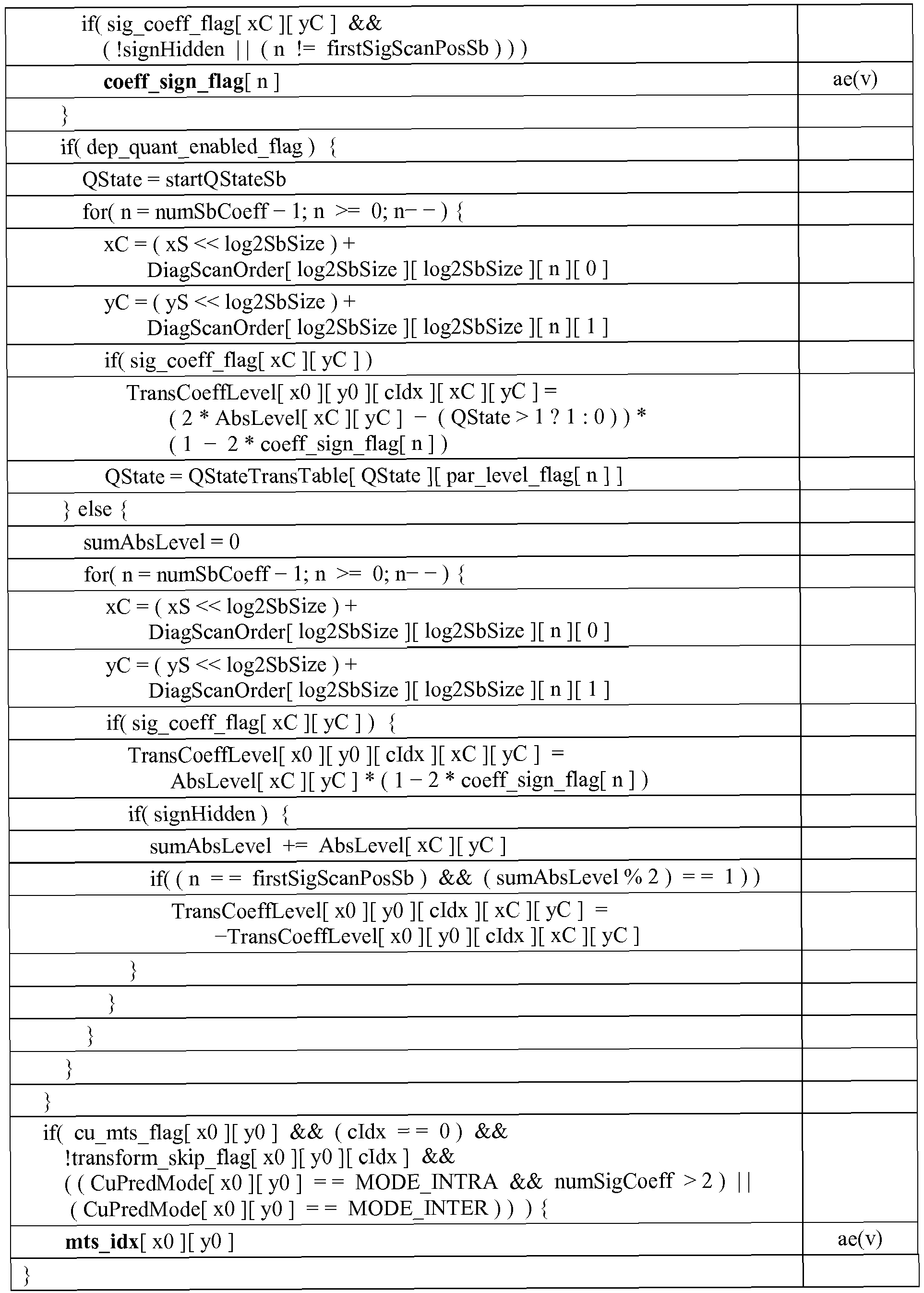

In the above table, the flag cu_mts_flag is used to decide whether transform_skip_flag is present in the bitstream:

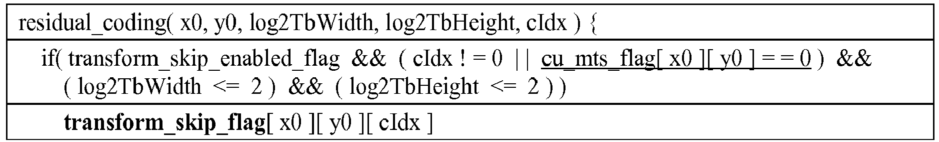

In one embodiment, it is proposed to modify the condition as follows:

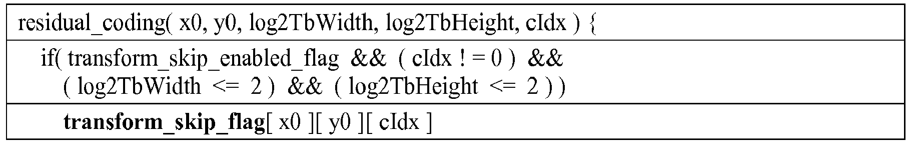

In another embodiment, it is proposed to modify the condition as follows:

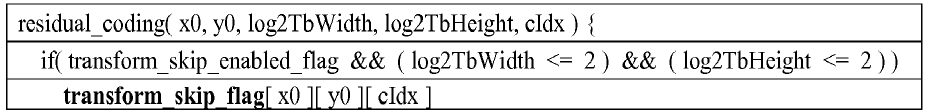

The condition for signaling mts_idx can also be adjusted to since transform skip flag is zero when cu_mts_flag is not zero:

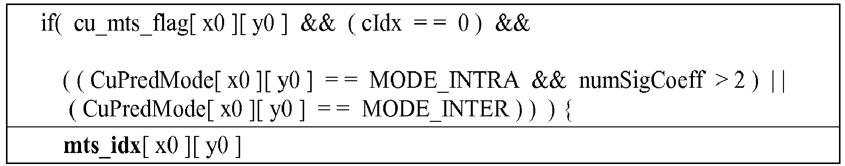

That is, the dependencies on the cu_mts_flag are removed according to present embodiments, and syntax element mts_idx is used to indicate which transform pair is used.

### Embodiments with Alternative Transform Set

In JEM software, three transform sets were proposed, as follows (with the notations {horizontal transform, vertical transform}):
TrSet1 = {DST7,DST7},{DCT8,DST7},{DST7,DCT8},{DCT8,DCT8}
TrSet2 = {DST7,DST7},{DST7,DST1},{DST1,DST7},{DST1,DST1}
TrSet3 = {DST7,DST7},{DST7,DCT5},{DCT5,DST7},{DCT5,DCT5}

Depending on the intra prediction mode, one of the above three sets is considered. To reduce the overall complexity in the VTM design, the number of transforms in EMT set is changed and restricted to 2 additional transform types (in addition to the core DCT-II transform). To do so, the last two transform sets are set to be the same as TrSet1. Thus, the current VTM transform sets are:
TrSet1 = {DST7,DST7},{DCT8,DST7},{DST7,DCT8},{DCT8,DCT8}
TrSet2 = {DST7,DST7},{DCT8,DST7},{DST7,DCT8},{DCT8,DCT8}
TrSet3 = {DST7,DST7},{DCT8,DST7},{DST7,DCT8},{DCT8,DCT8}

In a similar way, the following sets contain only two additional transforms (in addition to the core DCT-II transform) and provide a competitive performance to the original JEM design:
TrSet1 = {DST7,DST7},{DCT8,DST7},{DST7,DCT8}, {DCT8,DCT8}
TrSet2 = {DST7,DST7},{DST7,DCT2},{DCT2,DST7},{DCT2,DCT2}
TrSet3 = {DST7,DST7},{DST7,DCT2},{DCT2,DST7},{DCT2,DCT2}

The above is obtained by taking the JEM software transform sets shown above, and replacing both DST1 and DCT5 by DCT2, wherein the latter provides similar performance as the first two. Clearly, the last pairs of the second and third sets above are redundant, as {DCT2,DCT2} pair are already available when EMT_flag is zero.

Thus, in an embodiment, the EMT flag is removed and the three possible sets may be considered as:
TrSet1 = {DCT2,DCT2}, {DST7,DST7},{DCT8,DST7},{DST7,DCT8}
TrSet2 = {DCT2,DCT2}, {DST7,DST7},{DST7,DCT2},{DCT2,DST7}
TrSet3 = {DCT2,DCT2}, {DST7,DST7},{DST7,DCT2},{DCT2,DST7}

As in JEM, one of the above set may be chosen depending on the intra prediction mode. Within the chosen transform set, there is a core transform pair (e.g., {DCT2, DCT2}) and three other transform pairs (e.g., TrIdx = 0, 1, 2 in FIG. 4). In addition, according to other exemplary embodiments, instead of DST7 as shown above, one of the following transforms is used: DST3, DST4 and DST8; and instead of DCT8, one of following transform is used: DCT3, DCT4 and DCT7. While in the above examples, four transform pairs are considered in each transform set, other numbers of transform pairs may be used.

More generally, the present technique can be applied to encode or decode a pair of horizontal transform and vertical transform from a plurality of transform pairs, wherein the transform pair includes all transform pairs that may be used for encoding or decoding a block. To signal which transform pair is selected, a single index (e.g., mts_indx) is used. Alternatively, a single flag indicating which horizontal transform (e.g., mts_hor_flag) is chosen and a single flag indicating which vertical transform (e.g., mts_ver_lag) is chosen are used to signal which pair of horizontal and vertical transforms is selected.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application may be implemented in many different forms. The various figures and their associated description herewith provide some embodiments, but other embodiments are contemplated. The associated description of the figures does not limit the breadth of the exemplary implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the transform and inverse transform modules, and entropy coding and/or decoding modules (125, 150, 145, 230, 250), of a video encoder 100 and decoder 200 as shown in FIG. 1 and FIG. 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, the number of transform pairs. The specific values are for example purposes and the aspects described are not limited to these specific values.

FIG. 5 illustrates a block diagram of an example of a system in which various aspects and embodiments are implemented. System 500 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 500, singly or in combination, may be embodied in a single integrated circuit, multiple ICs, and/or discrete components. For example, in at least one embodiment, the processing and encoder/decoder elements of system 500 are distributed across multiple ICs and/or discrete components. In various embodiments, the system 500 is communicatively coupled to other systems, or to other electronic devices, via, for example, a communications bus or through dedicated input and/or output ports. In various embodiments, the system 500 is configured to implement one or more of the aspects described in this application.

The system 500 includes at least one processor 510 configured to execute instructions loaded therein for implementing, for example, the various aspects described in this application. Processor 510 may include embedded memory, input output interface, and various other circuitries as known in the art. The system 500 includes at least one memory 520 (e.g., a volatile memory device, and/or a non-volatile memory device). System 500 includes a storage device 540, which may include non-volatile memory and/or volatile memory, including, but not limited to, EEPROM, ROM, PROM, RAM, DRAM, SRAM, flash, magnetic disk drive, and/or optical disk drive. The storage device 540 may include an internal storage device, an attached storage device, and/or a network accessible storage device, as non-limiting examples.

System 500 includes an encoder/decoder module 530 configured, for example, to process data to provide an encoded video or decoded video, and the encoder/decoder module 530 may include its own processor and memory. The encoder/decoder module 530 represents module(s) that may be included in a device to perform the encoding and/or decoding functions. As is known, a device may include one or both of the encoding and decoding modules. Additionally, encoder/decoder module 530 may be implemented as a separate element of system 500 or may be incorporated within processor 510 as a combination of hardware and software as known to those skilled in the art.

Program code to be loaded onto processor 510 or encoder/decoder 530 to perform the various aspects described in this application may be stored in storage device 540 and subsequently loaded onto memory 520 for execution by processor 510. In accordance with various embodiments, one or more of processor 510, memory 520, storage device 540, and encoder/decoder module 530 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 510 and/or the encoder/decoder module 530 is used to store instructions and to provide working memory for processing that is needed during encoding or decoding. In other embodiments, however, a memory external to the processing device (for example, the processing device may be either the processor 510 or the encoder/decoder module 530) is used for one or more of these functions. The external memory may be the memory 520 and/or the storage device 540, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 500 may be provided through various input devices as indicated in block 505. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 505 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 500 to other electronic devices across USB and/or HDMI connections. It is to be understood that various aspects of input processing, for example, Reed-Solomon error correction, may be implemented, for example, within a separate input processing IC or within processor 510 as necessary. Similarly, aspects of USB or HDMI interface processing may be implemented within separate interface ICs or within processor 510 as necessary. The demodulated, error corrected, and demultiplexed stream is provided to various processing elements, including, for example, processor 510, and encoder/decoder 530 operating in combination with the memory and storage elements to process the datastream as necessary for presentation on an output device.

Various elements of system 500 may be provided within an integrated housing, Within the integrated housing, the various elements may be interconnected and transmit data therebetween using suitable connection arrangement 515, for example, an internal bus as known in the art, including the I2C bus, wiring, and printed circuit boards.

The system 500 includes communication interface 550 that enables communication with other devices via communication channel 590. The communication interface 550 may include, but is not limited to, a transceiver configured to transmit and to receive data over communication channel 590. The communication interface 550 may include, but is not limited to, a modem or network card and the communication channel 590 may be implemented, for example, within a wired and/or a wireless medium.

Data is streamed to the system 500, in various embodiments, using a Wi-Fi network such as IEEE 802.11. The Wi-Fi signal of these embodiments is received over the communications channel 590 and the communications interface 550 which are adapted for Wi-Fi communications. The communications channel 590 of these embodiments is typically connected to an access point or router that provides access to outside networks including the Internet for allowing streaming applications and other over-the-top communications. Other embodiments provide streamed data to the system 500 using a set-top box that delivers the data over the HDMI connection of the input block 505. Still other embodiments provide streamed data to the system 500 using the RF connection of the input block 505.

The system 500 may provide an output signal to various output devices, including a display 565, speakers 575, and other peripheral devices 585. The other peripheral devices 585 include, in various examples of embodiments, one or more of a stand-alone DVR, a disk player, a stereo system, a lighting system, and other devices that provide a function based on the output of the system 500. In various embodiments, control signals are communicated between the system 500 and the display 565, speakers 575, or other peripheral devices 585 using signaling such as AV.Link, CEC, or other communications protocols that enable device-to-device control with or without user intervention. The output devices may be communicatively coupled to system 500 via dedicated connections through respective interfaces 560, 570, and 580. Alternatively, the output devices may be connected to system 500 using the communications channel 590 via the communications interface 550. The display 565 and speakers 575 may be integrated in a single unit with the other components of system 500 in an electronic device, for example, a television. In various embodiments, the display interface 560 includes a display driver, for example, a timing controller (T Con) chip.

The display 565 and speaker 575 may alternatively be separate from one or more of the other components, for example, if the RF portion of input 505 is part of a separate set-top box. In various embodiments in which the display 565 and speakers 575 are external components, the output signal may be provided via dedicated output connections, including, for example, HDMI ports, USB ports, or COMP outputs.

Present embodiments may include creating and/or transmitting and/or receiving and/or decoding a bitstream or signal that includes one or more of the described syntax elements, or variations thereof. The embodiments may also comprise a TV, set-top box, cell phone, tablet, or other electronic device that performs bi-prediction according to any of the embodiments described.

Present embodiments may also include a TV, set-top box, cell phone, tablet, or other electronic device that performs bi-prediction according to any of the embodiments described, and that displays (e.g. using a monitor, screen, or other type of display) a resulting image. Present embodiments may also include a TV, set-top box, cell phone, tablet, or other electronic device that tunes (e.g. using a tuner) a channel to receive a signal including an encoded image, and performs bi-prediction according to any of the embodiments described. Present embodiments may also include a TV, set-top box, cell phone, tablet, or other electronic device that receives (e.g. using an antenna) a signal over the air that includes an encoded image, and bi-prediction according to any of the embodiments described.

Furthermore, according to an embodiment, a method for video encoding is presented, comprising: selecting a horizontal transform and a vertical transform from a set of transforms to transform prediction residuals of a current block of a video picture being encoded, wherein the set of transforms includes {DCT2, DCT2} and one or more other transform pairs; providing a syntax element indicating the selected horizontal transform and the selected vertical transform selected from the set of transforms; transforming the prediction residuals of the current block using the selected horizontal transform and the selected vertical transform to obtain transformed coefficients for the current block; and encoding the syntax element and the transformed coefficients of the current block.

According to another embodiment, a method for video decoding is presented, comprising: According to another embodiment, a method for video decoding is presented, comprising: obtaining a syntax element indicating a selected horizontal transform and a selected vertical transform selected from a set of transforms; determining, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; inversely transforming the transformed coefficients of the current block using the selected horizontal transform and the selected vertical transform to obtain prediction residuals for the current block; and decoding the current block using the prediction residuals.

According to another embodiment, an apparatus for video encoding is presented, comprising: means for selecting a horizontal transform and a vertical transform from a set of transforms to transform prediction residuals of a current block of a video picture being encoded, wherein the set of transforms includes {DCT2, DCT2} and one or more other transform pairs; means for providing a syntax element indicating the selected horizontal transform and the selected vertical transform selected from the set of transforms; means for transforming the prediction residuals of the current block using the selected horizontal transform and the selected vertical transform to obtain transformed coefficients for the current block; and encoding the syntax element and the transformed coefficients of the current block.

According to another embodiment, an apparatus for video decoding is presented, comprising: means for obtaining a syntax element indicating a selected horizontal transform and a selected vertical transform selected from a set of transforms; means for determining, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; means for inversely transforming the transformed coefficients of the current block using the selected horizontal transform and the selected vertical transform to obtain prediction residuals for the current block; and means for decoding the current block using the prediction residuals.

According to another embodiment, an apparatus for video encoding is presented, comprising one or more processors, wherein said one or more processors are configured to: select a horizontal transform and a vertical transform from a set of transforms to transform prediction residuals of a current block of a video picture being encoded, wherein the set of transforms includes {DCT2, DCT2} and one or more other transform pairs; provide a syntax element indicating the selected horizontal transform and the selected vertical transform selected from the set of transforms; transforming the prediction residuals of the current block using the selected horizontal transform and the selected vertical transform to obtain transformed coefficients for the current block; and encode the syntax element and the transformed coefficients of the current block. The apparatus may further comprise one or more memories coupled to said one or more processors.

According to another embodiment, an apparatus for video decoding is presented, comprising one or more processors, wherein said one or more processors are configured to: obtain a syntax element indicating a selected horizontal transform and a selected vertical transform selected from a set of transforms; determine, based on the syntax element, the selected horizontal transform and the selected vertical transform selected from the set of transforms to inversely transform transformed coefficients of a current block of a video picture being decoded, wherein the set of transforms includes {DCT2, DCT2} and one or more other transform pairs; inversely transform the transformed coefficients of the current block using the selected horizontal transform and the selected vertical transform to obtain prediction residuals for the current block; and decode the current block using the prediction residuals. The apparatus may further comprise one or more memories coupled to said one or more processors.

According to another embodiment, a signal comprising encoded video is formed by performing: selecting a horizontal transform and a vertical transform from a set of transforms to transform prediction residuals of a current block of a video picture being encoded, wherein the set of transforms includes {DCT2, DCT2} and one or more other transform pairs; providing a syntax element indicating the selected horizontal transform and the selected vertical transform selected from the set of transforms; transforming the prediction residuals of the current block using the selected horizontal transform and the selected vertical transform to obtain transformed coefficients for the current block; and encoding the syntax element and the transformed coefficients of the current block.

According to an embodiment, the syntax element is 2-bit and a first bit of the 2-bit syntax element indicates the selected horizontal transform and a second bit of the 2-bit syntax element indicates the selected vertical transform.

According to an embodiment, the syntax element has a first value which corresponds to transform pair {DCT2, DCT2} in the set of transforms being selected with the selected horizontal transform being DCT2 and the selected vertical transform being DCT2.

According to an embodiment, the syntax element has a second value which corresponds to transform pair {DST7, DST7} in the set of transforms being selected with the selected horizontal transform being DST7 and the selected vertical transform being DST7.

According to an embodiment, the syntax element has a third value which corresponds to transform pair {DCT8, DST7} in the set of transforms being selected with the selected horizontal transform being DCT8 and the selected vertical transform being DST7.

According to an embodiment, the syntax element has a fourth value which corresponds to transform pair {DST7, DCT8} in the set of transforms being selected with the selected horizontal transform being DST7 and the selected vertical transform being DCT8.

According to an embodiment, the first value is 00.

According to an embodiment, the second value is 01, the third value is 10 and the fourth value is 11.

According to an embodiment, instead of DST7, one of the following is used: DST3, DST4 and DST8; and instead of DCT8, one of following is used: DCT3, DCT4 and DCT7.

Additionally, an embodiment provides a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding video data according to the methods described above. One or more embodiments also provide a computer readable storage medium having stored thereon a bitstream generated according to the methods described above. One or more embodiments also provide a method and apparatus for transmitting or receiving the bitstream generated according to the methods described above.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video encoding, comprising:
selecting a horizontal transform and a vertical transform from a set of transforms to transform prediction residuals of a block of a video picture being encoded, wherein the set of transforms includes {DCT2, DCT2} and one or more other transform pairs;
providing a syntax element indicating the selected horizontal transform and the selected vertical transform selected from the set of transforms;
transforming the prediction residuals of the block using the selected horizontal transform and the selected vertical transform to obtain transformed coefficients for the block; and
encoding the syntax element and the transformed coefficients of the block.

2. A method for video decoding, comprising:
obtaining a syntax element indicating a selected horizontal transform and a selected vertical transform selected from a set of transforms;
determining, based on the syntax element, the selected horizontal transform and the selected vertical transform selected from the set of transforms to inversely transform transformed coefficients of a block of a video picture being decoded, wherein the set of transforms includes {DCT2, DCT2} and one or more other transform pairs;
inversely transforming the transformed coefficients of the block using the selected horizontal transform and the selected vertical transform to obtain prediction residuals for the block; and
decoding the block using the prediction residuals.

3. An apparatus for video encoding, comprising one or more processors, wherein said one or more processors are configured to:
select a horizontal transform and a vertical transform from a set of transforms to transform prediction residuals of a block of a video picture being encoded, wherein the set of transforms includes {DCT2, DCT2} and one or more other transform pairs;
provide a syntax element indicating the selected horizontal transform and the selected vertical transform selected from the set of transforms;
transform the prediction residuals of the block using the selected horizontal transform and the selected vertical transform to obtain transformed coefficients for the block; and
encode the syntax element and the transformed coefficients of the block.

4. An apparatus for video decoding, comprising one or more processors, wherein said one or more processors are configured to:
obtain a syntax element indicating a selected horizontal transform and a selected vertical transform selected from a set of transforms;
determine, based on the syntax element, the selected horizontal transform and the selected vertical transform selected from the set of transforms to inversely transform transformed coefficients of a block of a video picture being decoded, wherein the set of transforms includes {DCT2, DCT2} and one or more other transform pairs;
inversely transform the transformed coefficients of the block using the selected horizontal transform and the selected vertical transform to obtain prediction residuals for the block; and
decode the block using the prediction residuals.

5. The method of claim 1 or 2, or the apparatus of claim 3 or 4, wherein the set of transforms includes only pairs of: {DCT2, DCT2}, {DST7, DST7}, {DCT8, DST7}, {DST7, DCT8}.

6. The method of any one of claims 1, 2 and 5, or the apparatus of any one of claims 3-5, wherein the syntax element has a first value which corresponds to transform pair {DCT2, DCT2} in the set of transforms being selected with the selected horizontal transform being DCT2 and the selected vertical transform being DCT2.

7. The method of any one of claims 1, 2, 5 and 6, or the apparatus of any one of claims 3-6, wherein the syntax element has a second value which corresponds to transform pair {DST7, DST7} in the set of transforms being selected with the selected horizontal transform being DST7 and the selected vertical transform being DST7.

8. The method of any one of claims 1, 2, 5-7, or the apparatus of any one of claims 3-7, wherein the syntax element has a third value which corresponds to transform pair {DCT8, DST7} in the set of transforms being selected with the selected horizontal transform being DCT8 and the selected vertical transform being DST7.

9. The method of any one of claims 1, 2 and 5-8, or the apparatus of any one of claims 3-8, wherein the syntax element has a fourth value which corresponds to transform pair {DST7, DCT8} in the set of transforms being selected with the selected horizontal transform being DST7 and the selected vertical transform being DCT8.

10. The method of any one of claims 6-9, or the apparatus of any one of claims 6-9, wherein the first value is 00.

11. The method of any one of claims 6-10, or the apparatus of any one of claims 6-10, wherein the second value is 01, the third value is 10 and the fourth value is 11.

12. The method of any one of claims 6-11, or the apparatus of any one of claims 6-11, wherein instead of DST7, one of the following is used: DST3, DST4 and DST8; and instead of DCT8, one of following is used: DCT3, DCT4 and DCT7.

13. A bitstream, wherein the bitstream is formed by:
selecting a horizontal transform and a vertical transform from a set of transforms to transform prediction residuals of a block of a video picture being encoded, wherein the set of transforms includes {DCT2, DCT2} and one or more other transform pairs;
providing a syntax element indicating the selected horizontal transform and the selected vertical transform selected from the set of transforms;
transforming the prediction residuals of the block using the selected horizontal transform and the selected vertical transform to obtain transformed coefficients for the block; and
encoding the syntax element and the transformed coefficients of the block.

14. A non-transitory computer readable medium containing data content generated according to the method of any one of claims 1, 2 and 5-12, or the apparatus of any one of claims 3-12.

15. A computer program product comprising instructions for performing the method of any one of claims 1, 2 and 5-12 when executed by one of more processors.
